# EUROPÄISCHE PATENTANMELDUNG

(11) **EP 2 039 318 A2**
(43) Veröffentlichungstag der Anmeldung: **25.03.2009**
(21) Anmeldenummer: 08014832.3
(22) Anmeldetag: 21.08.2008
(51) Int. Cl.: A61C 7/14, A61C 7/28

(54) **Orthodontisches Bracket**

(30) Priorität: 21.09.2007 DE 102007046383
(71) Anmelder: Bernhard Förster GmbH, 75172 Pforzheim (DE)
(72) Erfinder: Förster, Rolf, 75173 Pforzheim (DE)
(74) Vertreter: Twelmeier Mommer & Partner

(57) **Zusammenfassung**

Die Erfindung betrifft ein orthodontisches Bracket mit einer Basis (2) zum Befestigen auf einem Zahn, und einem gekrümmten Bügel (3a), der zwischen einer Offenstellung, in der zwischen der Basis (2) und einem freien Ende des Bügels (3a) Platz zum Einlegen eines Drahtes (4) ist, und einer Verschlussstellung, in welche der Bügel (3a) einen eingelegten Draht (4) umgreift und zwischen sich und der Basis (2)einschließt, schwenkbar ist.

Erfindungsgemäß ist vorgesehen, dass auf der Basis (2) eine Haltelasche (5) zum verdrehsicheren Festhalten eines von dem Bügel (3a) umgriffenen Drahts (4) befestigt ist.

## Beschreibung

Die Erfindung geht aus von einem orthodontischen Bracket mit den im Oberbegriff des Anspruchs 1 angegebenen Merkmalen.

Derartige Brackets sind bereits seit vielen Jahren bekannt. Ein großer Vorteil derartiger Brackets besteht darin, dass sie sehr einfach hergestellt werden können, indem ein Metallstreifen, der an einem Ende einen gebogenen Abschnitt zur Ausbildung des Bügels aufweist, auf eine Basisplatte geschweißt wird. Dieser Bügel lässt sich zwischen einer Offenstellung, in der ein Draht zwischen einem freien Ende des Bügels und der Basisplatte hindurch geschoben werden kann, und einer Verschlussstellung, in welcher der Bügel einen eingelegten Draht umgreift und zwischen sich und der Basis einschließt, schwenken, indem der Metallstreifen gebogen wird.

Solche Brackets werden seit über 25 Jahren von Kieferorthopäden in großem Umfang verwendet und wegen ihrer guten Handhabbarkeit sehr geschätzt. Für Patienten haben solche Brackets den Vorteil, sehr flach zu sein und deshalb insbesondere bei Verwendung als Lingual Bracket einen hohen Tragekomfort zu bieten.

Allerdings lassen sich mit derartigen Brackets nur in zwei Richtungen Drehmomente übertragen, weshalb solche Brackets manchmal auch als 2D-Brackets bezeichnet werden.

Brackets, die eine Übertragung von Drehmomenten in drei Richtungen ermöglichen, sind im Stand der Technik in mannigfaltigen Formen bekannt, beispielsweise aus US 2005/0019719 A1, US 2002/0034715 A1, US 4,669,980 und EP 1 332 726 A1. Derartige Brackets sind in der Herstellung jedoch wesentlich aufwendiger, für den Kieferorthopäden schwerer zu Handhaben und bieten einen geringeren Tragekomfort, da sie nicht so flach hergestellt werden können.

Aufgabe der Erfindung ist es deshalb, einen Weg aufzuzeigen, wie mit einem einfach aufgebauten Bracket der eingangs genannten Art auf Zähne in drei Richtungen ein Drehmoment ausgeübt werden kann ohne den Tragekomfort zu beeinträchtigen oder die Handhabbarkeit für Kieferorthopäden wesentlich zu erschweren.

Diese Aufgabe wird erfindungsgemäß durch ein Bracket mit den im Anspruch 1 angegebenen Merkmalen gelöst. Vorteilhafte Weiterbildungen der Erfindung sind Gegenstand der Unteransprüche.

Indem einem bekannten Bracket eine Haltelasche hinzugefügt wird, lässt sich auf genial einfache Weise erreichen, dass über das Bracket Drehmomente in drei Richtungen übertragen werden können. Indem nämlich ein Spanndraht mit einem vierkantigen oder näherungsweise vierkantigen Querschnitt verwendet wird, kann durch die Haltelasche die Orientierung des Drahtes in Bezug auf die Basis des Brackets vorgegeben werden. Mit der Haltelasche lässt sich ein Verdrehen oder Verkanten des Spanndrahtes verhindern, so dass in einer zusätzlichen Richtung ein Drehmoment auf den Zahn ausgeübt werden kann. Neben einem Drehen eines Zahns um seine Längsachse und einem seitlichen Kippen kann auf diese Weise auch der Neigungswinkel eines Zahns korrigiert werden, was als "torquen" bezeichnet wird.

Die verblüffend einfache Lösung, einem bekannten Bracket eine Haltelasche hinzuzufügen, erhöht den Herstellungsaufwand eines Brackets nur unwesentlich. Die Haltelasche kann nämlich als ein Metallstreifen ausgebildet sein, der mit einem Abschnitt stoffschlüssig auf der Basis befestigt ist, bevorzugt durch Verschweißen. Der Tragekomfort wird durch eine erfindungsgemäße Haltelasche überhaupt nicht beeinträchtigt, da diese die Abmessungen des Brackets insbesondere senkrecht zur Basis nicht ändert.

Mit einem erfindungsgemäßen Bracket können Kieferorthopäden Zahnfehlstellungen, die ein Torquen von Zähnen erfordern, ebenso leicht wie Zahnfehlstellungen, die nur ein Verschieben, Längsdrehen oder Kippen von Zähnen erfordern, behandeln. Die für Kieferorthopäden gewohnte Bewegung des Einschiebens eines Spanndrahtes unter einen offen stehenden Bügel eines Brackets, lässt sich bei einem erfindungsgemäßen Brackt auch zum Einschieben des Drahts unter die Haltelasche nutzen. Zusätzliche Arbeitsschritte sind also nicht erforderlich.

Prinzipiell könnte die Haltelasche einen Draht durch Klemmung fixieren. Bevorzugt ist die Haltelasche aber aus einem harten Material und starr an der Basis befestigt. Ein Vierkantdraht, dessen Stärke etwas geringer, beispielsweise 0,01 mm oder 0,02 mm kleiner, als der Abstand zwischen einem Halteabschnitt der Haltelasche und der Basis ist, lässt sich dann problemlos zwischen die Basis und den Halteabschnitt der Haltelasche schieben. Ein Verdrehen des Drahtes wird verhindert, da dies ein Aufbiegen der Haltelasche erfordern würde, was wegen der Härte der Haltelasche sehr hohe Kräfte erfordern würde. Die Haltelasche kann beispielsweise aus gehärtetem Edelstahl, insbesondere kaltverfestigtem Edelstahl, gefertigt sein, um den bei einer orthodontischen Behandlung auftretenden Kräften Stand halten zu können.

Die Bügel erfindungsgemäßer Brackets können als gekrümmte Abschnitte von Streifen ausgebildet sein, die mit einen ebenen Abschnitt der Basis befestigt sind. Die Bügel können dann durch Biegen des Metallstreifens zwischen einer Offenstellung und einer Verschlussstellung geschwenkt werden. Bevorzugt sind die Bügel aus einem weicheren Material und deshalb biegsameren als die Haltelasche, beispielsweise aus weichgeglühtem Edelstahl.

Weitere Einzelheiten und Vorteile der Erfindung werden anhand eines Ausführungsbeispiels unter Bezugnahme auf die beigefügten Zeichnungen erläutert. Die dabei beschriebenen Merkmale können einzeln oder in Kombination zum Gegenstand von Ansprüchen gemacht werden. Es zeigen:
- Figur 1:: eine Schrägansicht eines Brackets mit einem Spanndraht;
- Figur 2:: das dargestellte Bracket in einer Draufsicht und
- Figur 3:: das dargestellte Bracket in einer Seitenansicht.

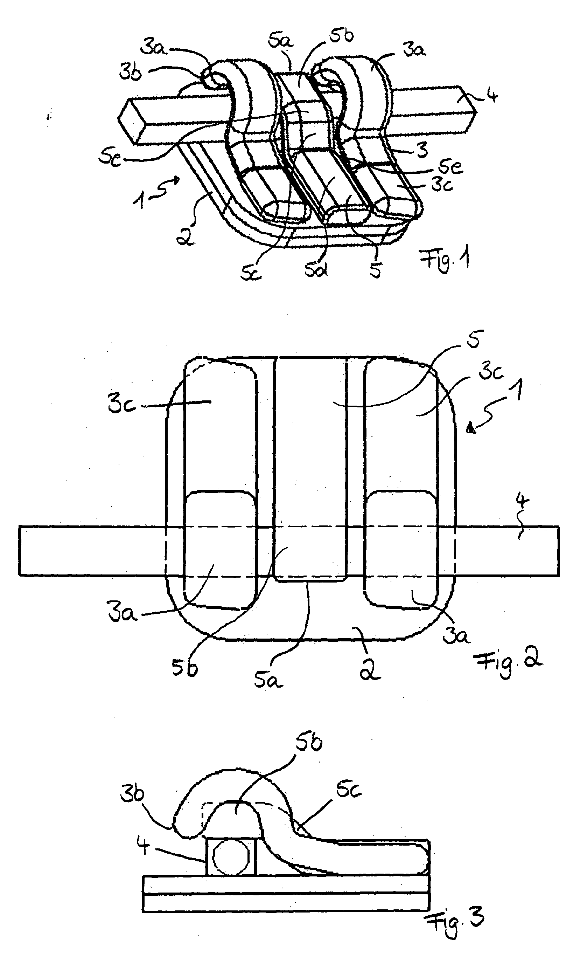

Das in Figur 1 dargestellte Bracket 1 hat eine als Basisplatte ausgebildete Basis 2, mit der es bestimmungsgemäß auf einen Zahn aufgeklebt wird, und zwei gekrümmte Bügel 3a, die jeweils als gekrümmter Abschnitt eines Streifens 3 ausgebildet sind. Die Bügel 3a sind zwischen einer in Figur 3 gezeigten Offenstellung, in der zwischen der Basisplatte 2 und einem freien Ende 3b des Bügels 3a Platz zum Einlegen eines Drahtes 4 ist, und einer Verschlussstellung, in welcher der Bügel 3a einen eingelegten Draht 4 umgreift und zwischen sich und der Basisplatte 2 einschließt, schwenkbar. Beim Schwenken des Bügels 3a wird der Streifen 3, der mit einem Abschnitt 3c, vorzugsweise durch Schweißen, auf der Basisplatte 2 befestigt ist, gebogen. Der Streifen 3 ist bevorzugt aus weichgeglühtem Edelstahl, so dass das zum Einlegen eines Drahtes 4 erforderlich Biegen der Bügel 3a leicht möglich ist.

In ihrer Verschlussstellung verhindern die Bügel 3a, dass sich ein Draht 4 quer zu seiner Längsrichtung parallel zur Basisplatte 2 bewegt. Die biegsamen Bügel 3a können ein Verdrehen Drahts 4 relativ zur Basisplatte 2 aber nicht verhindern. Das dargestellte Bracket 1 weist deshalb zusätzlich eine Haltelasche 5 auf, um einem Verdrehen oder Verkanten eines von den Bügeln 3a umschlossenen Drahtes 4 entgegenzuwirken. Die Haltelasche 5 ist ein zwischen den beiden Bügeln 3a angeordneter Metallstreifen, beispielsweise aus kaltverfestigtem Edelstahl. Die Haltelasche 5 hat einen Befestigungsabschnitt 5d, über den sie mit der Basisplatte 2 stoffschlüssig, bevorzugt durch Verschweißen oder Löten, verbunden ist.

Die Haltelasche 5 hat ein freies Ende 5a mit einem daran anschließenden Halteabschnitt 5b, zwischen dem und der Basis 2 sich bestimmungsgemäß ein von dem Bracket 1 gehaltenen Draht 4, also einen von den Bügeln 3a umgriffenen Draht 4, erstreckt. Der Halteabschnitt 5b erstreckt sich parallel zur Basisplatte 2, um einem Verdrehen oder Verkippen eines Vierkantdrahts 4, wie er in den Figuren dargestellt ist, entgegenzuwirken.

Zwischen dem freien Ende 5a der Haltelasche 5 und der Basis 2 ist, auch wenn kein Draht 4 eingelegt ist, ein Freiraum, der es ermöglicht einen Draht 4 unter die Haltelasche 5 zu schieben. Bevorzugt ist das freie Ende 5a der Haltelasche 5 abgerundet oder abgeschrägt, was das Einschieben eines Drahtes 4 erleichtert.

Wie Figur 1 zeigt, ist die Haltelasche 5 geknickt oder gebogen. Bevorzugt hat die Haltelasche 5 zwei Knickstellen 5e, die bevorzugt parallel verlaufen. Auf diese Weise wird erreicht, dass sich sowohl der Halteabschnitt 5b als auch der Befestigungsabschnitt 5d parallel zur Basisplatte erstrecken.

Bei dem dargestellten Ausführungsbeispiel schließt an den Halteabschnitt 5b ein schräg zur Basisplatte 2 verlaufender Abschnitt 5c an, der wiederum in den auf der Basisplatte 2 aufliegenden Befestigungsabschnitt 5d übergeht, der stoffschlüssig mit der Basisplatte 2 verbunden ist.

### Bezugszahlen

- 1: Bracket
- 2: Basisplatte
- 3: Streifen
- 3a: Bügel
- 3b: Ende des Streifens 3
- 3c: Abschnitt
- 4: Draht
- 5: Haltelasche
- 5a: Ende der Haltelasche
- 5b: Halteabschnitt der Haltelasche
- 5c: Zwischenabschnitt der Haltelasche
- 5d: Befestigungsabschnitt der Haltelasche
- 5e: Knick der Haltelasche

## Patentansprüche

1. Orthodontisches Bracket mit
einer Basis (2) zum Befestigen auf einem Zahn, und
einem gekrümmten Bügel (3a), der zwischen einer Offenstellung, in der zwischen der Basis (2) und einem freien Ende (3b) des Bügels (3a) Platz zum Einlegen eines Drahtes (4) ist, und einer Verschlussstellung, in welche der Bügel (3a) einen eingelegten Draht (4) umgreift und zwischen sich und der Basis (2) einschließt, schwenkbar ist,
**dadurch gekennzeichnet, dass** auf der Basis (2) eine Haltelasche (5) zum verdrehsicheren Festhalten eines von dem Bügel (3a) umgriffenen Drahts (4) befestigt ist.

2. Bracket nach Anspruch 1, **dadurch gekennzeichnet, dass** die Basis (2) zwei gekrümmte Bügel (3a) trägt, zwischen denen die Haltelasche (5) angeordnet ist.

3. Bracket nach einem der vorstehenden Ansprüche, **dadurch gekennzeichnet, dass** der Bügel (3a) als gekrümmter Abschnitt (3c) eines Streifens (3) ausgebildet ist, der einen ebenen Abschnitt (3c) aufweist, mit dem er an der Basis (2) befestigt ist.

4. Bracket nach Anspruch 3, **dadurch gekennzeichnet, dass** der Streifen (3) beim Schwenken des Bügels (3a) zwischen der Offenstellung und der Verschlussstellung gebogen wird.

5. Bracket nach einem der vorstehenden Ansprüche, **dadurch gekennzeichnet, dass** die Haltelasche (5) ein Metallstreifen ist.

6. Bracket nach einem der vorstehenden Ansprüche, **dadurch gekennzeichnet, dass** die Haltelasche (5) aus einem härteren Material als der Bügel (3) ist.

7. Bracket nach Anspruch 6, **dadurch gekennzeichnet, dass** der Bügel (3) aus weichgeglühtem Edelstahl und die Haltelasche (5) aus kaltverfestigtem Edelstahl ist.

8. Bracket einem der vorstehenden Ansprüche, **dadurch gekennzeichnet, dass** die Haltelasche (5) einen sich parallel zur Basis (2) erstreckenden Halteabschnitt (5b) aufweist, zwischen dem und der Basis (2) bestimmungsgemäß ein Draht (4) gehalten wird.

9. Bracket nach Anspruch 8, **dadurch gekennzeichnet, dass** sich der Halteabschnitt (5b) in einem Abstand von der Basis (2) erstreckt.

10. Bracket nach Anspruch 8 oder 9, **dadurch gekennzeichnet, dass** der Halteabschnitt (5b) an einem freien Ende (5e) der Haltelasche (5), das in einem Abstand von der Basis (2) angeordnet ist, beginnt.

11. Bracket nach Anspruch 8 oder 9, **dadurch gekennzeichnet, dass** sich zwischen dem Halteabschnitt (5b) und dem Befestigungsabschnitt (5d) ein schräg zur Basis (2) verlaufender Abschnitt (5c) erstreckt.

12. Bracket nach einem der vorstehenden Ansprüche, **dadurch gekennzeichnet, dass** die Haltelasche (5) geknickt oder gebogen ist.
